(19) Europäisches Patentamt
European Patent Office
Office européen des brevets

(11) **EP 4 174 660 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **21205427.4**

(22) Anmeldetag: **28.10.2021**

(51) Internationale Patentklassifikation (IPC):
**G06F 11/3668** $^{(2025.01)}$ **G06F 9/451** $^{(2018.01)}$

(52) Gemeinsame Patentklassifikation (CPC):
**G06F 11/3668; G06F 11/3692;** G06F 9/451

(54) **VERFAHREN ZUM TESTEN VON STEUERGERÄTE**

CONTROL DEVICE TESTING METHOD

PROCÉDÉ D'ESSAI DES DISPOSITIFS DE CONTRÔLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.05.2023 Patentblatt 2023/18**

(73) Patentinhaber: **VOLKSWAGEN AG**
**38440 Wolfsburg (DE)**

(72) Erfinder: **Glück, Matthias**
**38176 Wendeburg (DE)**

(56) Entgegenhaltungen:
**US-A1- 2020 117 587 US-B1- 10 338 993**

**Beschreibung**

Die Erfindung betrifft ein Verfahren zum Testen von Steuergeräten sowie ein Recheneinheitsprogramm und ein Recheneinheitsprogrammprodukt. Zudem werden eine Testschaltung und eine entsprechende Testvorrichtung vorgestellt.

Steuergeräte sind in einer Vielzahl von unterschiedlichsten technischen Lösungen ein wichtiger Bestandteil. Dabei reicht ihre Anwendung von einfachen bis hin zu essentiellen Aufgabenbereichen. Insbesondere Steuergeräte in Fahrzeugen, Schiffen oder in Flugzeugen sind für essentielle Aufgabenbereiche vorgesehen, sodass ohne ihre einwandfreie Funktionsweise ein sicherer Betrieb nicht gewährleistbar ist.

Steuergeräte in Fahrzeugen, Schiffen oder allgemein in der Flugindustrie werden nach dem klassischen V-Modell entwickelt. Dabei werden auf der linken Seite V Anforderungen formuliert, welche auf der rechten Seite V dann getestet werden beziehungsweise zum Test kommen. Das V-Modell geht allgemein dabei von einzelnen disjunkten, eindeutigen, atomaren und testbaren Anforderungen aus. Dies steht im Einklang mit den Softwareanforderungen gemäß beispielsweise der ISO 29148. Im Test werden die Anforderungen einzeln nacheinander durch verschiedene Testentwurfsverfahren getestet. Diese Verfahren sind etwa in der ISO 26262 für sicherheitskritische Systeme beschrieben. Auch sind Verfahren in der ISO 29119 detailliert beschrieben.

Durch die sequentielle Ausführung der entsprechenden Tests und damit das eigentliche Abtesten der einzelnen Anforderungen kann keine Aussage über eine eventuell existierende kombinatorische Abdeckung getroffen werden.

Bisherige Verfahren und Produkte geben Resultate in einfacher Form aus oder zeigen maximal redundante oder ausgelassene Komponenten auf, ohne dabei auf eventuell vorhandene Kombinationen einzugehen. Dadurch sind keine Aussagen über kombinatorische Abdeckungen möglich, sodass die von dem getesteten Steuergerät im Zusammenhang stehenden Funktionen nur jeweils für sich, aber nicht in einem übergeordneten Kontext getestet werden. Auf diese Weise sind keine Aussagen über fehlgeschlagene Funktionen in gegenseitiger Abhängigkeit möglich, was mitunter zu einem Fehlinterpretieren hinsichtlich eines Testqualitätsmaß führt. Sowohl für eine erstmalige Freigabe eines solch getesteten Steuergeräts als auch während eines entsprechenden Betriebs von solch einem Steuergerät können hieraus gravierende Nachteile hervorgehen.

Zudem werden Funktionen von Steuergeräten jeweils innerhalb dieser getestet. Es sind aber zunehmend auch Szenarien vorhanden, in welchen Funktionen von jeweiligen Steuergeräten unter Umständen sich gegenseitig beeinflussen. Dieser Umstand wird von den bestehenden Prüfroutinen nur teilweise, wenn überhaupt, berücksichtigt, was somit als nachteilig anzusehen ist.

US 10,338,993 B1 betrifft eine Recheneinheit, die eine Testsuite erzeugt, die Testfälle zum Testen eines Systems bereitstellt. Eine Testbedingung in der Testsuite umfasst eine von unterschiedlichen Ebenen, die unterschiedliche Optionen darstellen, die einem kategorialen Faktor für das System zugeordnet sind.

US 2020/0117587 A1 betrifft eine log-file-Analyse, bei der akzeptable Abweichungen zwischen log-file-Einträgen zur Erzeugung unterschiedlicher Muster verwendet werden, wobei ein Abgleich von log-file-Einträgen mit bekannten akzeptablen Erfolgsmustern einen Hinweis auf System- oder Anwendungsanomalien liefern soll.

Der Erfindung liegt nun die Aufgabe zugrunde, ein alternatives Verfahren zum Testen von Steuergeräten bereitzustellen, welches die zuvor angesprochenen Nachteile wenigstens zum Teil überkommt.

Die Erfindung ist in den beigefügten Ansprüchen beschrieben.

In bevorzugter Ausgestaltung der Erfindung ist vorgesehen, dass ein Computerimplementiertes Verfahren zum Testen von Steuergeräten bereitgestellt wird. Solch ein Verfahren umfasst dabei die folgenden Schritte: Zunächst werden wenigstens zwei Steuergeräte bereitgestellt und betrieben, wobei ein jeweiliges Steuergerät mehrere Funktionen umfasst, darunter wenigstens eine Funktion in Abhängigkeit wenigstens einer Bedingung und wenigstens eine invariante Funktion umfasst. Dann wird eine Testroutine bereitgestellt und betrieben, welche jeweils die betriebenen Steuergeräte hinsichtlich ihrer Funktion testet. Anschließend werden die zu testenden Funktionen in wenigstens zwei Gruppen innerhalb der jeweiligen Steuergeräte aufgeteilt, wobei eine erste Gruppe Funktionen umfasst, welche benutzerdefiniert als sicherheitsrelevante Funktion klassifiziert werden und alle weiteren Gruppen die übrigen Funktionen umfassen. Dann werden die jeweiligen Funktionen der wenigstens zwei Gruppen getestet. Anschließend wird ermittelt, inwieweit eine getestete Funktion je Steuergerät eine Verbindung zu wenigstens einer getesteten Funktion aus wenigstens einer anderen Gruppe im gleichen Steuergerät aufweist.

Es folgt das Kombinieren von getesteten Funktionen der ersten Gruppe mit jeweils verbundenen und getesteten Funktionen aus allen anderen Gruppen jeweils innerhalb des jeweiligen Steuergeräts durch Bildung von Kreuzprodukten zwischen den jeweiligen Funktionen. Es werden dann jeweilige erste Zwischenergebnisse von jeweiligen Kombinationen erstellt.

Anschließend wird ermittelt, durch Bildung von Kreuzprodukten zwischen den jeweiligen Funktionen, inwieweit eine getestete Funktion der ersten Gruppe von einem ersten Steuergerät eine Verbindung zu wenigstens einer getesteten Funktion von einem zweiten Steuergerät aufweist. Es werden dann jeweilige zweite Zwischenergebnisse von jeweiligen Kombinationen zwischen den wenigstens zwei Steuergeräten erstellt. Anschließend werden die ersten Zwischenergebnisse und zweiten Zwischenergebnisse zu einem Kombinationstestergebnis zusammengefasst. Schlussendlich wird dieses Kombinationstestergebnis dann bereitgestellt.

Auf diese Weise ist es möglich, ein alternatives Verfahren zum Testen von Steuergeräten bereitzustellen, welches die zuvor angesprochenen Nachteile wenigstens zum Teil überkommt.

Das vorgestellte Verfahren ermöglicht es, Erkenntnisse über steuergeräteübergreifende Zusammenhänge hinsichtlich jeweiliger Funktionen von jeweiligen Steuergeräten schnell und detailliert zu erhalten, sodass diese Erkenntnisse für einen entsprechenden Qualitätsprozess einsetzbar sind. Es ist somit möglich, Erkenntnisse bereitzustellen, auf Basis derer dann eine gezielte Absicherung von mehreren Steuergeräten erfolgen kann. Insbesondere bei komplexeren Produkten mit einer entsprechend hohen Anzahl von Steuergeräten, welche sich mitunter gegenseitig beeinflussen, ist somit das vorgestellte Verfahren für das Prüfen der Steuergerätelandschaft mit Vorteil einzusetzen.

Das vorgestellte Verfahren ist somit grundlegend dafür ausgelegt, eine Abdeckung etwa von Sicherheitsfunktionen unter Berücksichtigung von funktionalen Merkmalen zu gewährleisten. Insbesondere dann, wenn das zu testende Steuergerät in einem Produkt vorgesehen wird, welches in Teilbereichen sicherheitsrelevante Merkmale aufweist, ist es wichtig zu erkennen, ob alle Sicherheitsfunktionen auch im Hinblick auf jeweilige Interdependenzen greifen oder nicht. Dadurch, dass sicherheitsrelevante Funktionen und damit verbundene weitere Funktionen gleichermaßen für sich getestet werden und anschließend über eine Verknüpfung dieser dann eine übergeordnete Aussage in Form eines Kombinationsergebnisses bereitgestellt wird, ist es möglich, ein erweitertes Sicherheitsqualitätsmaß zu erreichen. Ist etwa eine für sich stehende Funktion, welche für sich genommen als nicht sicherheitsrelevant einzustufen ist, wiederum für eine sicherheitsrelevante Funktion von einer gewissen Bedeutung, so liefert das Kombinationsergebnis hier erste Hinweise etwa über ein Ausmaß von derlei problematischen Kreuzverbindungen. Das Kombinationsergebnis kann somit in nachgelagerten Schritten etwa für die Verbesserungen des Steuergeräts herangezogen werden und liefert Experten erste konkrete Hinweise über mögliche Schwachstellen.

Diese beschriebenen Vorteile sind nunmehr auch bei zwei oder mehreren Steuergeräten mittels des vorgestellten Verfahrens erreichbar, wobei eine gegenseitige Einflussnahme der Steuergeräte mitberücksichtigt wird.

In weiterer bevorzugter Ausgestaltung der Erfindung ist vorgesehen, dass ein Recheneinheitsprogramm bereitgestellt wird, welches Programmcodemittel zum Durchführen aller Schritte gemäß einem der Ansprüche 1 bis 6 umfasst, wenn das Programm auf einer Recheneinheit ausgeführt wird. Die zuvor genannten Vorteile gelten, soweit übertragbar, auch für das bereitgestellte Recheneinheitsprogramm. Die Recheneinheit, auf welcher das Recheneinheitsprogramm vorgesehen wird, kann beispielsweise ein jeglicher Computer sein, insbesondere ein Computer, welcher für die Verwendung in einem Fahrzeug ausgelegt ist.

In weiterer bevorzugter Ausgestaltung der Erfindung ist vorgesehen, dass ein Recheneinheitsprogrammprodukt bereitgestellt wird, welches Programmcodemittel umfasst, welche auf einem computerlesbaren Medium gespeichert sind, um das Verfahren gemäß einem der Ansprüche 1 bis 6 durchzuführen, wenn das Programm in einer Recheneinheit läuft. Die zuvor genannten Vorteile gelten, soweit übertragbar, auch für das vorgestellte Recheneinheitsprogrammprodukt.

Die Recheneinheit, für welche das Recheneinheitsprogrammprodukt vorgesehen ist, kann beispielsweise ein jeglicher Computer sein, insbesondere ein Computer, welcher für die Verwendung in einem Fahrzeug ausgelegt ist. Auch kann beispielsweise ein Computer gemeint sein, welcher sich für eine Verwendung in der Flugzeugindustrie, in der Biotechnologie oder für die Schifffahrt eignet.

In weiterer bevorzugter Ausgestaltung der Erfindung ist vorgesehen, dass eine Testschaltung bereitgestellt wird, welche dazu eingerichtet ist, ein Verfahren gemäß einem der Ansprüche 1 bis 6 auszuführen. Die zuvor genannten Vorteile gelten, soweit übertragbar, auch für die vorgestellte Testschaltung.

In weiterer bevorzugter Ausgestaltung der Erfindung ist vorgesehen, dass eine Testvorrichtung bereitgestellt wird, welche eine Testschaltung nach Anspruch 9 umfasst. Die zuvor genannten Vorteile gelten, soweit übertragbar, auch für die vorgestellte Testvorrichtung.

Weitere bevorzugte Ausgestaltungen der Erfindung ergeben sich aus den übrigen, in den Unteransprüchen genannten Merkmalen.

Gemäß der Erfindung ist vorgesehen, dass eine erste Gruppe Funktionen umfasst, welche benutzerdefiniert als sicherheitsrelevante Funktionen klassifiziert werden und alle weiteren Gruppen die übrigen Funktionen umfassen. Somit lassen sich jeweilige Teilaussagen hinsichtlich jeweiliger Funktionen zunächst ermitteln, um anschließend eine gezielte Kombinatorik durchzuführen. Es lassen sich benutzerdefiniert jeweilige Einstellungen bewirken, sodass das vorgestellte Verfahren in einfachen Schritten mit Vorteil an jeweilige Anwendungsszenarien anpassbar ist, sodass ein besonders flexibles Verfahren resultiert.

Auch ist gemäß der Erfindung vorgesehen, dass das Kombinieren als jeweilige Kreuzproduktbildung vollzogen wird. Eine zielgenaue Kombinatorik erhöht somit die Aussagekraft des Endergebnisses, sodass eine gezielte Interpretation möglich ist.

Ferner ist in einer weiteren bevorzugten Ausgestaltung der Erfindung vorgesehen, dass die vorherigen Schritte im Zusammenhang mit wenigstens einer Software des zu testendenden Steuergeräts vollzogen werden. Das Verfahren ist entsprechend flexibel einsetzbar und lässt sich für dieses Szenario auslegen.

Auch ist in einer weiteren bevorzugten Ausgestaltung der Erfindung vorgesehen, dass die vorherigen Schritte im Zusammenhang mit wenigstens einer Hardwarekomponente des zu testendenden Steuergeräts vollzogen werden. Das Verfahren ist entsprechend flexibel einsetzbar und lässt sich für dieses Szenario auslegen.

Schlussendlich ist in einer weiteren bevorzugten Ausgestaltung der Erfindung vorgesehen, dass jeweilige Zeitinformationen von jeweiligen zu testenden Funktionen ermittelt werden und wobei ermittelt wird, inwieweit eine jeweils getestete Funktion je Steuergerät eine Verbindung zu wenigstens einer getesteten Funktion des gleichen Steuergeräts aus wenigstens einer anderen Gruppe allgemein und in Bezug auf jeweilige Zeitinformationen aufweist und wobei diese getesteten Funktionen mit jeweils verbundenen und getesteten Funktionen aus allen anderen Gruppen je Steuergerät unter Berücksichtigung eines allgemeinen Bezugs und jeweiliger Zeitinformationen kombiniert werden und wobei jeweilige dritte Zwischenergebnisse von diesen jeweiligen Kombinationen erstellt werden und wobei diese jeweiligen dritten Zwischenergebnisse die ersten Zwischenergebnisse ersetzen.

Durch Auswertung der Zeitbezüge zwischen funktionalen und sicherheitsrelevanten Funktionen ist es nunmehr möglich, dass Aussagen über das Einleiten/Verfehlen von Sicherheitsmerkmalen über die Zeit gegeben werden können. Es ist somit etwa möglich, Hinweise in dem Kombinationsergebnis und zumindest teilweise bereits in den Zwischenergebnissen zu erhalten, welche darauf hindeuten, wann in Bezug auf temporale Zusammenhänge welche Bedingungen von Sicherheitsmerkmalen verletzt werden. Diese Erkenntnisse sind dann für eine entsprechende Produktoptimierung zu verwenden. Auch können somit Erkenntnisse erhalten werden, inwiefern zeitliche Bezüge von den zu testenden Funktionen in Sicherheitslücken resultieren, die es dann zu schließen gilt. Mit anderen Worten werden auf diese Weise zeitliche Informationen bei der Kreuzproduktbildung über mehrere Steuergeräte verwendet. Es ist somit möglich, jeweilige Kreuzproduktbildungen über mehrere Steuergeräte mit Hinblick auf jeweilige zeitliche Informationen zu bilden, sodass auch diese Verbindungen bei der durchzuführenden Testroutine entsprechend berücksichtigt werden. Es findet somit eine Betrachtung über mehrere Steuergeräte statt, wobei Verbindungen bezogen auf zeitliche Bezüge zwischen den Steuergeräten berücksichtigt werden, sodass somit ein besonders aussagekräftiges Kombinationsergebnis erzielt wird.

Das vorgestellte Verfahren und die vorgestellten Gegenstände sind beispielsweise mit Vorteil innerhalb der Fahrzeugindustrie einsetzbar und verwendbar. Insbesondere die Gegenstände sind im Zusammenhang mit jeglichen Fahrzeugen verwendbar. Beispielsweise um jeweilige Steuergeräte in Fahrzeugen, insbesondere Personenkraftfahrzeugen, zu testen. Beispielsweise kann es sich dabei um teil- oder vollautonome Fahrzeuge handeln. Auch im Zusammenhang mit Flugsicherheits- und anderen Sicherheitsnormen sind Einsätze der offenbarten Gegenstände und des Verfahrens vorstellbar. Darüber hinaus ist überall dort ein Einsatz denkbar, in denen kombinierte Produkttests (Elektronik / Software) relevant sind. Neben der Fahrzeugindustrie ist somit auch ein Einsatz im Flugzeugbau, allgemein in der Avionik oder im Schiffsbau denkbar. Auch in der Medizinindustrie ist ein Einsatz denkbar. Letztlich ist ein Einsatz im Zusammenhang mit jeglichen SW/HW (Elektronik)-testbaren Produkten denkbar, die entsprechend mit den Debug-Schnittstellen und/oder Busschnittstellen und/oder Signalschnittstellen ausgestattet sind.

Die Erfindung wird nachfolgend anhand eines Ausführungsbeispiels und dazugehöriger Zeichnungen näher erläutert. Die Figuren zeigen:

Figur 1 eine schematische Darstellung von einem Ablaufdiagramm von einem Verfahren zum Testen von Steuergeräten;

Figur 2 eine schematische Darstellung von einem Recheneinheitsprogramm;

Figur 3 eine schematische Darstellung von einem Recheneinheitsprogrammprodukt;

Figur 4 eine schematische Darstellung von einer Testschaltung;

Figur 5 eine schematische Darstellung von einer Testvorrichtung.

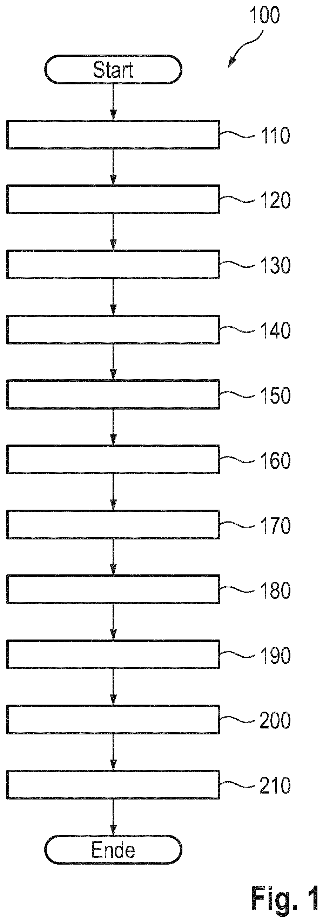

Figur 1 zeigt eine schematische Darstellung von einem Ablaufdiagramm 100 von einem Verfahren zum Testen von Steuergeräten. In einem ersten Verfahrensschritt 110 werden wenigstens zwei Steuergeräte bereitgestellt und betrieben, wobei ein jeweiliges Steuergerät wenigstens eine Funktion in Abhängigkeit wenigstens einer Bedingung und wenigstens eine invariante Funktion umfasst. In einem zweiten Verfahrensschritt 120 wird eine Testroutine bereitgestellt und betrieben, welche jeweils die betriebenen Steuergeräte hinsichtlich ihrer Funktion testet. In einem dritten Verfahrensschritt 130 werden die zu testenden Funktionen in wenigstens zwei Gruppen innerhalb der jeweiligen Steuergeräte aufgeteilt. In einem vierten Verfahrensschritt 140 werden die jeweiligen Funktionen der wenigstens zwei Gruppen getestet. Beispielsweise ist es vorstellbar, dass diese jeweiligen Testresultate in Form von Logfiles erstellt werden. In einem fünften Verfahrensschritt 150 wird ermittelt, inwieweit eine getestete Funktion je Steuergerät eine Verbindung zu wenigstens einer getesteten Funktion aus wenigstens einer anderen Gruppe im gleichen Steuergerät aufweist. Die im vorherigen Schritt erstellten Logfiles sind beispielsweise hierfür auslesbar vorliegend, sodass diese Informationen entsprechend herausgezogen werden können. In einem sechsten Verfahrensschritt 160 werden die getesteten Funktionen mit jeweils verbundenen und getesteten Funktionen aus allen anderen Gruppen jeweils innerhalb des jeweiligen Steuergeräts kombiniert. In einem siebten Verfahrensschritt 170 werden jeweilige erste Zwischenergebnisse von jeweiligen Kombinationen erstellt. In einem achten Verfahrensschritt 180 wird ermittelt, inwieweit eine getestete Funktion von einem ersten Steuergerät eine Verbindung zu wenigstens einer getesteten Funktion von einem zweiten Steuergerät aufweist. In einem neunten Verfahrensschritt 190 werden jeweilige zweite Zwischenergebnisse von jeweiligen Kombinationen zwischen den wenigstens zwei Steuergeräten erstellt. In einem zehnten Verfahrensschritt 200 werden die ersten Zwischenergebnisse und zweiten Zwischenergebnisse zu einem Kombinationstestergebnis zusammengefasst. In einem elften Verfahrensschritt 210 wird das Kombinationsergebnis bereitgestellt.

Das Testen der jeweiligen Funktionen kann etwa über geeignete Testcoveragemetriken in Anlehnung an ISO29119-4 vollzogen werden. Auf diese Weise ist es möglich, ein gewisses Maß an Qualität zu ermitteln. Dabei ist weiterhin vorstellbar, dass die Zuordnung der Funktion auf jeweilige Gruppen insbesondere so vollzogen wird, sodass eine Unterscheidung der Funktionen basierend auf ihrer Eigenschaft in wenigstens einen Testobserver und in Invarianten durchführbar ist. Dabei ist ein Testobserver ein Überwacher einer Funktion. Er basiert auf einer Anforderung auf der linken Seite des V-Modells. Er ist somit der eigentliche Prüfalgorithmus zum Test der konkreten Anforderung, auf welcher er basiert. Im Gegenteil zu einer Invariante ist ein Testobserver an wenigstens eine Bedingung geknüpft. Wenn zum Beispiel die Eigenspannung größer oder gleich sechs Volt ist und das Produkt sich im eingeschalteten Zustand befindet, wobei dieser Zustand zusätzlich als "aktiver Modus" deklariert ist, dann soll die Unterstützungsleistung immer größer oder gleich einem vorgegebenen Wert sein. Im Gegensatz zu einem Testobserver ist eine Invariante eine Bedingung, welche zu jedem beliebigen Zeitpunkt gültig ist. Zum Beispiel kann vorgesehen sein, dass ein Produkt innerhalb einer vorgegebenen Zeitspanne, beispielsweise fünf Millisekunden, auf dem Bus eine Antwort geben muss. Somit ist eine Invariante ein spezieller Observer, wobei diese Invariante jedoch ohne Bedingungen vorgesehen ist.

Basierend auf der allgemeinen Aussage, eine gewisse Funktion, welche in einem Steuergerät hinterlegt ist und sich zu einer bestimmten Gruppe zuordnen lässt, abzutesten, ist es im Detail vorstellbar, dass dieses Abtesten wie folgt vollzogen wird: Wenn die Testobserver respektive die Invarianten als Coveragepunkte definiert werden, so ergeben sich jeweilige Coveragemengen, die hauptsächlich bei anforderungsbasierten Testroutinen linear durchlaufen werden. Die jeweiligen Coveragepunkte, einsortiert in eine Menge, basieren dabei auf jeweils getesteten Anforderungen und somit auch auf den durch die Anforderungen hinterlegten jeweiligen Merkmalen und deren jeweiligen Definitionen, welche jeweils mit den zu testenden Funktionen assoziiert sind. Beispielsweise resultiert eine Menge an Coveragepunkten wie folgt:

$$G = \{ C_i \} \text{ mit } i = 0 \dots n - 1$$

Die einzelnen $C_i$ werden bei dem anforderungsbasierten Testen alle bei vollständiger Umsetzung der Anforderungen im Test abgelaufen. So ist es möglich, eine Basis für eine inhaltliche Anforderungsabdeckung zu generieren, welche für das Testen einer jeweiligen für sich stehenden Funktion repräsentativ ist. Vor dem Durchführen des eigentlichen Tests können beispielsweise jeweilige $C_i$ auf null gesetzt werden. Jedes $C_i$ wird inkrementiert sobald es im Test angelaufen wird. Dabei kann über eine Struktur im $C_i$ vermerkt werden, ob es sich um einen erfolgreichen oder fehlgeschlagenen Test für das jeweilige $C_i$ handelt. Am Ende von den anforderungsbasierten Testläufen darf kein $C_i$ ungefüllt sein. Es ist somit möglich, eine Statistik über die Auswertung von G anzulegen oder sich ausgeben zu lassen, wobei vermerkt wird, welches $C_i$ wie oft erfolgreich beziehungsweise fehlgeschlagen ist.

Ausgehend von diesen jeweils durchgeführten Testläufen mit jeweiligen resultierenden Informationen ist anschließend eine Erweiterung um die Mächtigkeit der Kombinatorik von $C_i$ vorgesehen. Diese Kombinatorik ist im Speziellen deswegen wichtig, um etwa bei sicherheitsrelevanten Produkten eine entsprechende Merkmals-Kreuzproduktcoverage aufzubauen. Insbesondere in sicherheitsrelevanten Produkten ist es wichtig zu erkennen, ob alle Sicherheitsfunktionen unter verschiedenen funktionalen Aspekten greifen. Dies ist entsprechend mit jeweiligen Coveragepunktmengen aus den verschiedenen Gruppen möglich.

$S = \{ CS_i \}$ mit $i = 0 \dots k - 1$, wobei k die Anzahl der Sicherheitsfunktion ist.

Die restlichen Funktionen sind entsprechend in eine andere Menge, respektive in eine andere Gruppe, zu packen:

$$F = \{ C_i \} \text{ mit } i = 0 \dots n - k - 1.$$

Durch die Kreuzproductbildung der Mengen S und F ist anschließend eine Abdeckung der Sicherheitsfunktionen unter Berücksichtigung der funktionalen Merkmale möglich:

$$K = S \times F.$$

Auch hier ist es möglich, über die Zwischenergebnisse hinaus ein aggregiertes Kombinationsergebnis zu bestimmen, welches entsprechend für eine weitere Analyse dann bereitstellbar ist. Mit anderen Worten werden entsprechend nach einem jeweiligen Vorgang von jedem Ki die Anzahl der erfolgreichen und nicht erfolgreichen Tests wiedergegeben. Ein jeweils vollständiges Ablaufen aller Ki kann beispielsweise dann in Kombination mit einem entsprechendem Robustheitstestverfahren erfolgen.

Mittels des vorgestellten Verfahrens ist es nunmehr möglich, Feature Coverage Analysen unter Nutzung von Observern und Invarianten für eine Multi-Steuergeräteabsicherung durchzuführen.

Das vorgestellte Verfahren ergänzt somit auf vorteilhafte Weise den Aufbau einer Qualitätsmetrik, welche eine Multi-Steuergeräteabsicherung im Fokus hat. Das vorgestellte Verfahren zielt darauf ab, den Bezug zu mehreren Steuergeräten während des Prüfens zu realisieren, um den Bezug auf die Absicherung von mehreren Steuergeräten und damit Funktionen eines komplexen Produkts, wie beispielsweise eines Fahrzeugs, insbesondere eines Personenkraftfahrzeugs, eines Flugzeugs oder ähnliches herzustellen.

Komplexe technische Produkte weisen Funktionen auf, die mehrere Steuergeräte, welche in dem Produkt entsprechend zumindest teilweise vernetzt angeordnet sind, überstreichen können. Als Beispiel sei hier ein Parklenkassistent im Fahrzeug benannt. Bei der Absicherung dieser Funktion wächst die Dimension der K-Matrix um den Bezug auf das jeweilige Steuergerät:

$$K = S(t, Ej) \times F (t, Ej)$$

Das bedeutet, dass sowohl Sicherheitsfunktionen S vom Steuergerät E Index j mit zeitlichem Bezug t als auch funktionale Funktionen F mit zeitlichem Bezug t und Steuergerät E Index j.

Mit anderen Worten stellt beispielsweise die Funktion F des Steuergerätes E Index j eine Teilfunktion der übergreifenden Funktion wie zum Beispiel des Parklenkassistenten dar, also zum Beispiel eine übergreifende Funktion G.

Es folgt dann, dass die Teilfunktionen F der E Index j dann mit den jeweiligen Kreuzprodukten ihrer zugehörigen Sicherheitsfunktionen S der E Index j kreuz genommen werden. Damit lässt sich eine Aussage finden ob jede Teilfunktion F vollständig mit ihren Sicherheitsfunktionen S getestet wurde. Daraus resultiert eine Aussage, dass jede Teilfunktion F unter Fehlfunktionen ihre Sicherheitsmechanismen S greifen.

Diese vorliegende Form K ist entsprechend hilfreich, um nun auch Steuergeräte übergreifend eine entsprechende Metrik aufzubauen, um Sicherheitsmerkmale von Ej mit funktionalen Merkmalen als auch Sicherheitsmerkmalen der anderen Steuergeräte Ej - 1 zu kombinieren.

Folgendes Beispiel aus dem Bereich der Fahrzeugnutzung ist dabei vorstellbar:
Das Fensterheben und -runterfahren eines Seitenfensters im Fahrzeug darf keine Auswirkung auf das Abschalten der Lenkung haben. In diesem Beispiel geht es demnach um das Fenstersteuergerät als auch um das Lenkungssteuergerät. Beide Steuergeräte sind dabei sowohl am zugehörigen Fahrzeugbus des Fahrzeugs, in welchem diese beiden Steuergeräte angeordnet sind, als auch am Bordnetz angehängt. Dabei dürfen Busbotschaften auf dem Bus für das Fenstersteuergerät das Lenkungssteuergerät nicht beeinflussen. Genauso wenig darf es einen ungewünschten Einfluss auf das Lenkungssteuergerät durch Fensterhoch/Runterfahren und damit resultierende Spannungsschwankungen auf das Bordnetz geben.

Dieses angeführte Beispiel ist relativ einfach. Es kann als Lösung dabei etwa eine disjunkte Absicherung gewählt werden, das heißt ohne die hier vorliegende Metrik, also jedes Steuergerät für sich (ohne somit der Möglichkeit einer gegenseitigen Einflussnahme).

Es gibt jedoch komplexere Szenarien. Beispielsweise existieren Fahrzeugassistenzsysteme, die aufgrund ihrer zu erfüllenden Funktionen nicht für sich alleine betrieben werden können. So ist beispielsweise bei einem Parklenkassistenzsystem eine Zusammenarbeit von mehreren Steuergeräten zwingend nötig, um die gewünschte komplexe Funktion des Vorgangs Einparken oder allgemein einer Unterstützung des Fahrers zu ermöglichen. Die vorgestellte Metrik ist somit entsprechend sowohl für einfache als auch komplexere Fälle anwendbar, wobei der zeitliche Bezug auch als optional angesehen werden kann. Mit anderen Worten ist in einer Basisvariante des vorgestellten Verfahrens auch vorstellbar, nur die gegenseitigen Einflüsse über mehrere Steuergeräte übergreifend in den Fokus zu stellen.

Die Auswertung der Tupel in K gibt dem Testanalysten in der Gesamtfunktionsabsicherung beispielsweise auf Gesamtfahrzeugebene Metriken, um Aussagen über die Qualität der anforderungskombinatorischen Tests zu treffen.

Dabei dürfen Sicherheitsfunktionen, wie zum Beispiel schlagartiges Abbremsen, nicht in Kombination beim Einschalten vom Innenraumlicht auftreten. Anders herum ist es sicherlich interessant, aus der Metrik die Aussage zu erhalten, dass ein Sicherheitsmerkmal nicht ausgelöst wurde, obwohl die Erwartung dabei gewesen wäre, dass es hätte passieren müssen.

Die mittels des vorgestellten Verfahrens zu erhaltene Metriks erlaubt auch, die Auswertung von Funktionen und Sicherheitsfunktionen steuergeräteübergreifend in deren Zeitbezug. Das vorgestellte Verfahren lässt sich auch auf mechanische Tests abbilden, wenn man zum Beispiel den Suchrauch von mechanischen Bewegungen beschreiben will.

Es ist zudem vorstellbar, dass die Coveragepunkte sich auch zu komplexeren Szenarien aufbauen lassen. Zum Beispiel will man den Ablauf im Test von C1 → C4 → C5 sehen. Über eine Coverage-Merkmalspfadanalyse lassen sich Aussagen über die Stabilität des Produkts unter bestimmten funktionalen Bedingungen beschreiben.

Die Messung der Coveragepunkte kann in einem softwarebasierten Test durch das Abgreifen der Software-Variablen, der Strukturen und Informationen einfach geschehen. Bei einem vorliegenden elektronik-hardwarebasierten Test kann die Information aus den Datenströmen von entsprechenden Debug-Schnittstellen von MCU ermittelt werden. Dies kann beispielsweise in Kombination mit einem Echtzeitanalyseverfahren, welches für die Funktionsprüfungen von Hardware und Software von Steuergeräten ausgelegt ist, vollzogen werden.

Dadurch, dass eine Datenerhebung unabhängig vom Prüfort und einer Prüfumgebung ist, ist sie universell. Durch klare Messkriterien für eine Steuergerätesoftwarequalität können Produkte solider auf den Markt gebracht werden. Maßnahmen können kontrolliert werden und eine jeweilige Verbesserung der Steuergerätesoftware ist mittels des vorgestellten Verfahrens deswegen vorteilhaft messbar.

Insbesondere für den Fahrzeugbau ist das vorgestellte Verfahren von hohem Nutzen. Durch den stetig wachsenden Anteil von Softwarefunktionen im Fahrzeug steigt auch deren Wahrnehmung bei den Kunden. Die Kunden verstehen zunehmend, dass entsprechende Software von Steuergeräten die Qualität ihres Fahrzeugs bestimmen. Mit dem vorgestellten Verfahren ist es möglich, mit einem überschaubaren Aufwand auch komplexere Zusammenhänge abzuprüfen und insbesondere vernetzte Strukturen unter den genannten Bedingungen bereits während der Entwicklungsphase zu testen und je nach Ergebnis dann zu verbessern. Das vorgestellte Verfahren eignet sich, um eine Qualitätsmetrik aufzubauen beziehungsweise die jeweiligen erhaltenen Ergebnisse hierfür zu verwenden. Insbesondere ist auch eine Kombination aus hardware- und softwarebasierten Tests möglich, um folglich eine Gesamtqualitätsmetrik aufzubauen.

Für komplexer werdende Steuergeräte, auch in Bezug auf autonom fahrende Fahrzeuge, werden Metriken notwendig, die eine Aussage über die Produktqualität ermöglichen. Das hier vorgestellte Verfahren zeigt einen Weg dafür auf.

Durch klare Metriken als auch deren Auswertung und Nutzung ist es einem Anwenderkreis möglich, Produktentscheidungen auf Basis von Daten hervorzubringen, um somit gegebenenfalls eine qualitative Verbesserung vor Markteinführung zu erreichen.

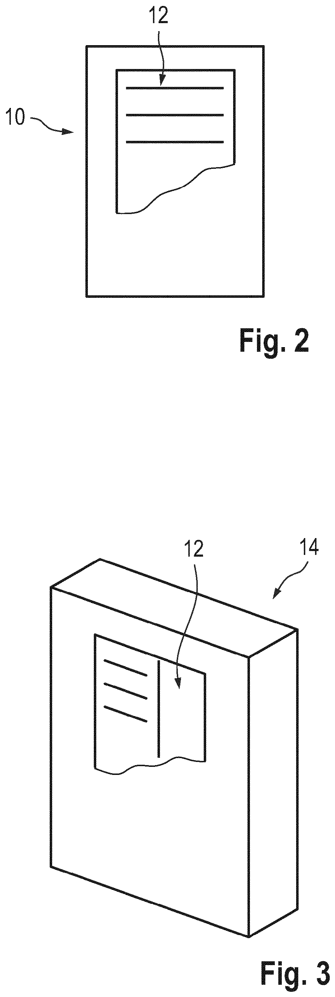

Figur 2 zeigt eine schematische Darstellung von einem Recheneinheitsprogramm 10. Solch ein Recheneinheitsprogramm 10 umfasst dabei Programmcodemittel 12 zum Durchführen aller Schritte gemäß einem der Ansprüche 1 bis 4, wenn das Programm auf einer nicht näher dargestellten Recheneinheit ausgeführt wird.

Figur 3 zeigt eine schematische Darstellung von einem Recheneinheitsprogrammprodukt 14. Solch ein Recheneinheitsprogrammprodukt 14 umfasst dabei Programmcodemittel 12, welche auf einem computerlesbaren Medium gespeichert sind, um das Verfahren gemäß einem der Ansprüche 1 bis 4 durchzuführen, wenn das Programm in einer Recheneinheit läuft.

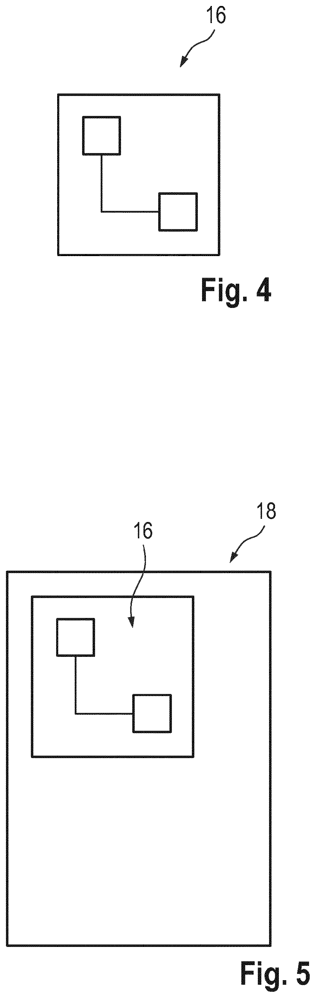

Figur 4 zeigt eine schematische Darstellung von einer Testschaltung 16. Solch eine Testschaltung 16 ist dazu eingerichtet, ein Verfahren gemäß einem der Ansprüche 1 bis 4 auszuführen.

Figur 5 zeigt eine schematische Darstellung von einer Testvorrichtung 18. Diese Testvorrichtung 18 umfasst dabei eine Testschaltung 16 nach Anspruch 7.

## Bezugszeichen

| 10 | Recheneinheitsprogramm |
| 12 | Programmcodemittel |
| 14 | Recheneinheitsprogrammprodukt |
| 16 | Testschaltung |
| 18 | Testvorrichtung |

| 100 | Ablaufdiagramm |
| 110 | erster Verfahrensschritt |
| 120 | zweiter Verfahrensschritt |
| 130 | dritter Verfahrensschritt |
| 140 | vierter Verfahrensschritt |
| 150 | fünfter Verfahrensschritt |
| 160 | sechster Verfahrensschritt |
| 170 | siebter Verfahrensschritt |
| 180 | achter Verfahrensschritt |
| 190 | neunter Verfahrensschritt |
| 200 | zehnter Verfahrensschritt |
| 210 | elfter Verfahrensschritt |

## Patentansprüche

1. Computerimplementiertes Verfahren zum Testen von Steuergeräten umfassend die folgenden Schritte:

   • Bereitstellen und Betreiben (110) von wenigstens zwei Steuergeräten, wobei ein jeweiliges Steuergerät mehrere Funktionen umfasst, darunter wenigstens eine Funktion in Abhängigkeit wenigstens einer Bedingung und wenigstens eine invariante Funktion umfasst;
   • Bereitstellen und Betreiben (120) einer Testroutine, welche jeweils die betriebenen Steuergeräte hinsichtlich ihrer Funktion testet;
   • Aufteilen (130) der zu testenden Funktionen in wenigstens zwei Gruppen innerhalb der jeweiligen Steuergeräte, wobei eine erste Gruppe Funktionen umfasst, welche benutzerdefiniert als sicherheitsrelevante Funktion klassifiziert werden und alle weiteren Gruppen die übrigen Funktionen umfassen;
   • Testen (140) jeweiliger Funktionen der wenigstens zwei Gruppen;
   • Ermitteln (150), inwieweit eine getestete Funktion je Steuergerät eine Verbindung zu wenigstens einer getesteten Funktion aus wenigstens einer anderen Gruppe im gleichen Steuergerät aufweist;

• Kombinieren (160) von getesteten Funktionen der ersten Gruppe mit jeweils verbundenen und getesteten Funktionen aus allen anderen Gruppen jeweils innerhalb des jeweiligen Steuergeräts durch Bildung von Kreuzprodukten zwischen den jeweiligen Funktionen;

• Erstellen (170) von jeweiligen ersten Zwischenergebnissen von jeweiligen Kombinationen;

• Ermitteln (180), durch Bildung von Kreuzprodukten zwischen den jeweiligen Funktionen, inwieweit eine getestete Funktion der ersten Gruppe von einem ersten Steuergerät eine Verbindung zu wenigstens einer getesteten Funktion von einem zweiten Steuergerät aufweist;

• Erstellen (190) von jeweiligen zweiten Zwischenergebnissen von jeweiligen Kombinationen zwischen den wenigstens zwei Steuergeräten;

• Zusammenfassen (200) der ersten Zwischenergebnisse und zweiten Zwischenergebnisse zu einem Kombinationstestergebnis;

• Bereitstellen (210) des Kombinationsergebnisses.

2. Verfahren nach Anspruch 1, wobei die vorherigen Schritte im Zusammenhang mit wenigstens einer Software des jeweils zu testenden Steuergeräts vollzogen werden.

3. Verfahren nach einem der vorherigen Ansprüche 1 und 2, wobei die vorherigen Schritte im Zusammenhang mit wenigstens einer Hardwarekomponente des jeweils zu testenden Steuergeräts vollzogen werden.

4. Verfahren nach einem der vorherigen Ansprüche, wobei jeweilige Zeitinformationen von jeweiligen zu testenden Funktionen ermittelt werden und wobei ermittelt wird, inwieweit eine jeweils getestete Funktion je Steuergerät eine Verbindung zu wenigstens einer getesteten Funktion des gleichen Steuergeräts aus wenigstens einer anderen Gruppe allgemein und in Bezug auf jeweilige Zeitinformationen aufweist und wobei diese getesteten Funktionen mit jeweils verbundenen und getesteten Funktionen aus allen anderen Gruppen je Steuergerät unter Berücksichtigung eines allgemeinen Bezugs und jeweiliger Zeitinformationen durch Bildung von Kreuzprodukten kombiniert werden und wobei jeweilige dritte Zwischenergebnisse von diesen jeweiligen Kombinationen erstellt werden und wobei diese jeweiligen dritten Zwischenergebnisse die ersten Zwischenergebnisse ersetzen.

5. Recheneinheitsprogramm (10) umfassend Programmcodemittel (12) zum Durchführen aller Schritte gemäß einem der Ansprüche 1 bis 4, wenn das Programm auf einer Recheneinheit ausgeführt wird.

6. Recheneinheitsprogrammprodukt (14) umfassend Programmcodemittel (12), welche auf einem computerlesbaren Medium gespeichert sind, um das Verfahren gemäß einem der Ansprüche 1 bis 4 durchzuführen, wenn das Programm in einer Recheneinheit läuft.

7. Testschaltung (16), welche dazu eingerichtet ist, ein Verfahren gemäß einem der Ansprüche 1 bis 4 auszuführen.

8. Testvorrichtung (18), welche eine Testschaltung (16) nach Anspruch 7 umfasst.

**Claims**

1. A computer-implemented method for testing control devices, comprising the steps of:

• Providing and operating (110) at least two control devices, wherein each control device comprises multiple functions, including at least one function dependent on at least one condition and at least one invariant function;

• Providing and operating (120) a test routine which tests the respective operated control devices with regard to their function;

• Dividing (130) the functions to be tested into at least two groups within the respective control devices, wherein a first group comprises functions which by user definition are classified as safety-relevant functions and wherein all further groups comprise the remaining functions;

• Testing (140) each of the functions of the at least two groups;

• Determining (150) to what extent a tested function per control device has a connection to at least one tested function from at least one other group in the same control device;

• Combining (160) tested functions of the first group with respectively connected and tested functions from all other groups within the respective control device by forming cross products between the respective functions;

• Creating (170) respective first intermediate results of each of the combinations;

• Determining (180), by forming cross products between the respective functions, the extent to which a tested function of the first group from a first control device has a connection to at least one tested function from a second control device;

• Creating (190) respective second intermediate results of respective combinations between the at least two control devices;

• Consolidating (200) the first intermediate results and second intermediate results into a combined test result;

• Providing (210) the combined result.

2. The method according to claim 1, wherein the previous steps are carried out in connection with at least one software of the control device to be tested in each case.

3. The method according to any of the preceding claims 1 and 2, wherein the previous steps are carried out in connection with at least one hardware component of the control device to be tested in each case.

4. The method according to any of the preceding claims, wherein respective time information of respective functions to be tested is determined and wherein it is determined to what extent each tested function per control device has a connection to at least one tested function of the same control device from at least one other group in general and with respect to respective time information and wherein these tested functions are combined with respectively connected and tested functions from all other groups per control device taking into account a general reference and respective time information by forming cross products and wherein respective third intermediate results are created from these respective combinations and wherein these respective third intermediate results replace the first intermediate results.

5. A computing unit program (10) comprising program code means (12) for performing all the steps according to any of claims 1 to 4 when the program is executed on a computing unit.

6. The computing unit program product (14) comprising program code means (12) which are stored on a computer-readable medium for performing the method according to any of claims 1 to 4 when the program runs in a computing unit.

7. A test circuit (16) which is designed to execute a method according to any of claims 1 to 4.

8. A test apparatus (18) comprising a test circuit (16) according to claim 7.

**Revendications**

1. Procédé mis en œuvre par ordinateur permettant de tester des appareils de commande, comprenant les étapes suivantes :

• fourniture et exploitation (110) d'au moins deux appareils de commande, dans lequel un appareil de commande respectif comprend plusieurs fonctions, dont au moins une fonction en fonction d'au moins une condition et au moins une fonction invariante ;

• fourniture et exploitation (120) d'une routine de test, laquelle teste respectivement les appareils de commande exploités quant à leur fonction ;

• division (130) des fonctions à tester en au moins deux groupes à l'intérieur des appareils de commande respectifs, dans lequel un premier groupe comprend des fonctions qui sont classées de manière définie par l'utilisateur comme étant des fonctions relatives à la sécurité, et tous les autres groupes comprennent les fonctions restantes ;

• test (140) des fonctions respectives des au moins deux groupes ;

• détermination (150) de la mesure dans laquelle une fonction testée par appareil de commande présente un lien avec au moins une fonction testée d'au moins un autre groupe dans le même appareil de commande ;

• combinaison (160) de fonctions testées du premier groupe avec des fonctions respectivement liées et testées de tous les autres groupes, respectivement, à l'intérieur de l'appareil de commande respectif en formant des produits croisés entre les fonctions respectives ;

• création (170) de premiers résultats intermédiaires respectifs de combinaisons respectives ;

• détermination (180), en formant des produits croisés entre les fonctions respectives, de la mesure dans laquelle une fonction testée du premier groupe provenant d'un premier appareil de commande a un lien avec au moins une fonction testée provenant d'un second appareil de commande ;

• création (190) de deuxièmes résultats intermédiaires respectifs de combinaisons respectives entre les au moins deux appareils de commande ;

• résumé (200) des premiers résultats intermédiaires et des deuxièmes résultats intermédiaires en un résultat de test de combinaison ;

• fourniture (210) du résultat de combinaison.

2. Procédé selon la revendication 1, dans lequel les étapes précédentes sont réalisées en relation avec au moins un logiciel de l'appareil de commande respectif à tester.

3. Procédé selon l'une des revendications précédentes 1 et 2, dans lequel les étapes précédentes sont réalisées en relation avec au moins un composant matériel de l'appareil de commande respectif à tester.

4.   Procédé selon l'une des revendications précédentes, dans lequel des informations temporelles respectives de fonctions respectives à tester sont déterminées et dans lequel il est déterminé dans quelle mesure une fonction testée respective par appareil de commande présente un lien avec au moins une fonction testée du même appareil de commande provenant d'au moins un autre groupe en général et par rapport à des informations temporelles respectives et dans lequel ces fonctions testées sont combinées avec des fonctions respectivement liées et testées provenant de tous les autres groupes par appareil de commande en tenant compte d'une référence générale et d'informations temporelles respectives par formation de produits croisés et dans lequel des troisièmes résultats intermédiaires respectifs de ces combinaisons respectives sont créés et dans lequel ces troisièmes résultats intermédiaires respectifs remplacent les premiers résultats intermédiaires.

5.   Programme de calculateur (10), comprenant des moyens de code de programme (12) permettant de mettre en œuvre toutes les étapes selon l'une des revendications 1 à 4 lorsque le programme est exécuté sur un calculateur.

6.   Produit de programme de calculateur (14) comprenant des moyens de code de programme (12) qui sont stockés sur un support lisible par ordinateur pour mettre en œuvre le procédé selon l'une des revendications 1 à 4 lorsque le programme est exécuté sur un calculateur.

7.   Circuit de test (16), lequel est conçu pour exécuter un procédé selon l'une des revendications 1 à 4.

8.   Dispositif de test (18), lequel comprend un circuit de test (16) selon la revendication 7.

Fig. 1

Fig. 2

Fig. 3

16

**Fig. 4**

18

16

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10338993 B1
- US 20200117587 A1